# EUROPEAN PATENT SPECIFICATION

(11) **EP 0 640 658 B1**
(45) Date of publication and mention of the grant of the patent: **30.12.1998**
(21) Application number: 94113330.8
(22) Date of filing: 25.08.1994
(51) Int. Cl.: C08L 83/04, C08K 3/36, B01D 19/04

(54) **Silicone antifoam composition**
Schaumverhindernde Siliconzusammensetzung
Composition anti-moussante de silicone

(30) Priority: 26.08.1993 JP 234245/93
(43) Date of publication of application: 01.03.1995
(73) Proprietor: Dow Corning Toray Silicone Company, Limited, Tokyo 103 (JP)
(72) Inventor: Kobayashi, Hideki, Dow Corning Toray, Ichihara-shi, Chiba Pref. (JP)
(74) Representative: Spott, Gottfried, Dr.

(56) References cited:
- EP-A- 0 465 262
- EP-A- 0 465 263
- EP-A- 0 516 109
- DE-A- 1 545 185

## Description

The present invention relates to an antifoam composition that exhibits excellent and long-lasting performance under strong alkaline conditions.

Antifoam compositions derived from silicone oils, such as diorganopolysiloxanes, exhibit activites superior to that of antifoams based on other materials, and do so at smaller quantities of addition for silicone based compositions. Consequently, they are in wide use for breaking or suppressing foam in industries such as chemicals, foods, petroleum products, textiles, plastics, cements, paints and adhesives. However, under strongly alkaline conditions, diorganopolysiloxane based antifoam compositions experience a decline in both the level and persistence of their antifoam activity. This often necessitates a continuous or intermittent addition of more antifoam composition.

Numerous antifoams have been proposed to solve this problem. For example, Japanese Patent Publication [Kokai] 56-48211; Japanese Patent Publication 59-69110; Japanese Patent Publication 4-42042; Japanese Patent Publication 4-42043 and Japanese Patent Publication 5-184814.

However, under strongly alkaline conditions, these silicone antifoam compositions exhibit an unsatisfactory antifoam activity and a reduced persistence due to scission of the main chain of the organopolysiloxane in such compositions.

The present invention provides an antifoam composition comprising (A) 100 weight parts of an organosilicon polymer having the general formula: 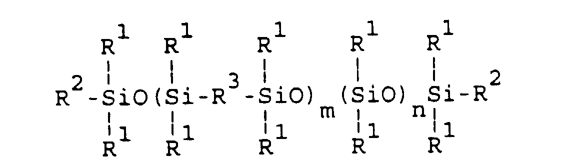 wherein R¹ denotes a monovalent hydrocarbon group free of aliphatic unsaturation, R² is selected from hydrogen atom, monovalent hydrocarbon groups, and hydroxyl groups, R³ denotes an alkylene group, m has a value of at least 2, n has a value of zero or greater with the proviso that m is greater than or equal to n, and (B) from 1 to 50 weight parts of a silica having a specific surface area of at least 50 m²/g.

This composition of the present invention surprisingly produces an antifoam composition that exhibits an excellent and long-lasting antifoam activity under strongly alkaline conditions.

The organosilicon polymer (A) is the principal agent of the antifoam composition of the present invention, and has the general formula: 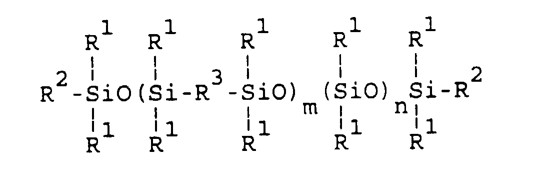 R¹ denotes monovalent hydrocarbon groups free of aliphatic unsaturation. It is exemplified by monovalent hydrocarbon groups, such as methyl, ethyl, propyl, and butyl; aryl groups, such as phenyl, tolyl, and xylyl; and aralkyl groups, such as benzyl and phenethyl. Preferred R¹ groups are methyl and phenyl. R² denotes a group selected from hydrogen atoms, monovalent hydrocarbon groups, and hydroxyl groups. The monovalent hydrocarbon groups of R² are alkyl groups, such as methyl, ethyl, propyl, and butyl; alkenyl groups, such as vinyl, allyl, butenyl, pentenyl, and hexenyl; aryl groups, such as phenyl, tolyl, and xylyl ; and aralkyl groups, such as benzyl and phenethyl. R³ denotes alkylene groups which are selected from ethylene, propylene, butylene, hexylene, trimethylene, 2-methyltrimethylene, pentamethylene, hexamethylene, 3-ethyl-hexamethylene, octamethylene, -CH₂(CH₃)CH-, -CH₂CH(CH₃)CH₂-, and -(CH₂)₁₈-, cycloalkylene radicals such as cyclohexylene, arylene radicals such as phenylene, and combinations of divalent hydrocarbon radicals such as benzylene. The subscript m indicates the degree of polymerization for the silalkylenesiloxane unit and is an integer with a value of at least 2. The subscript n indicates the degree of polymerization for the diorganosiloxane unit and is an integer with a value of zero or greater than zero. The subscript m must have a value at least as large as that of n or a value greater than n.

The viscosity of component (A) is not specifically restricted as long as component (A) is a liquid at ambient temperature. However, the viscosity at 25°C is preferably 5 to 50,000 mm²/s (centistokes) and particularly preferred is viscosity ranges between 100 to 10,000 mm²/s (centistokes) at 25°C. These ranges facilitate preparation of the compositions of the present invention. Component (A) are liquid organosilicon polymers having the following general formulas: 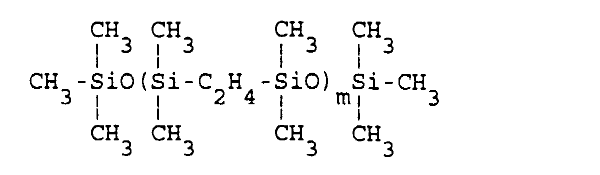 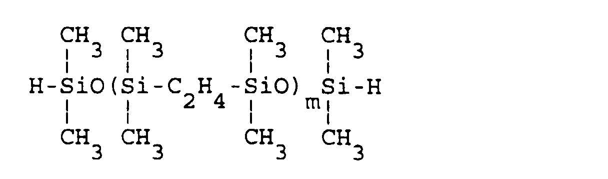 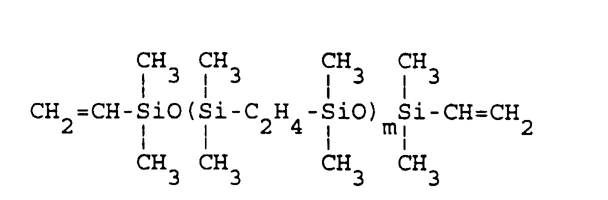 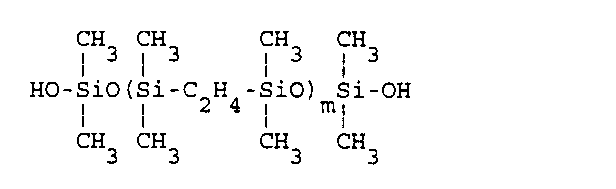 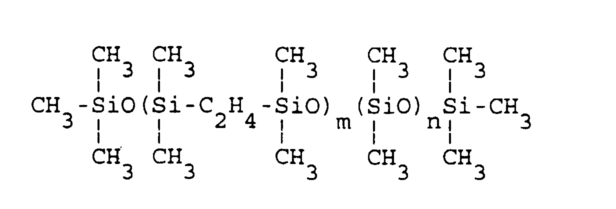 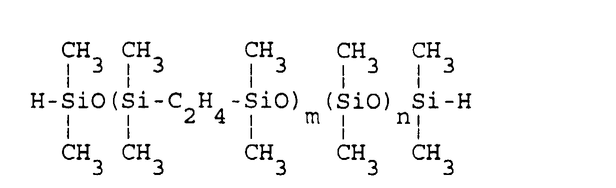 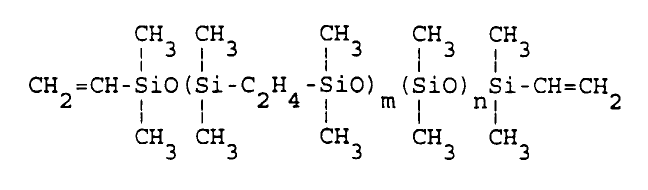 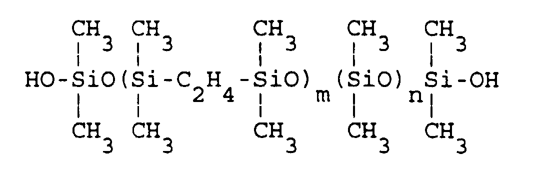 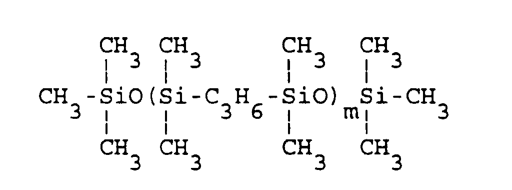 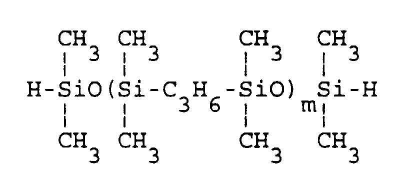 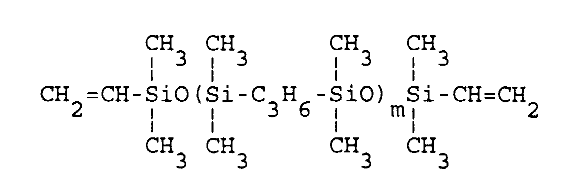 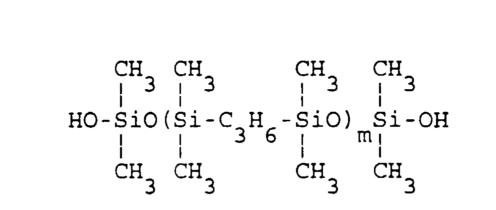 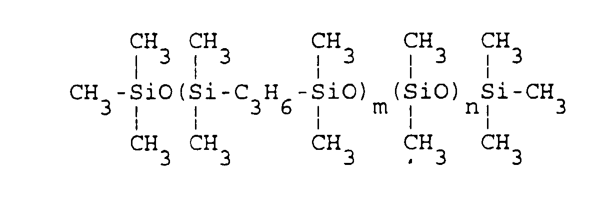 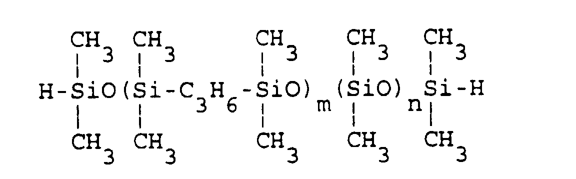 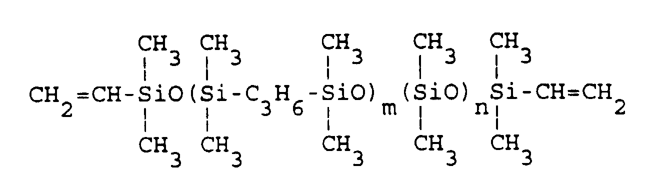 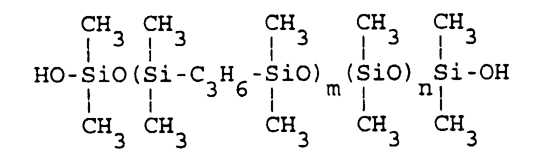 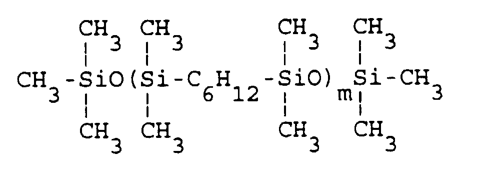 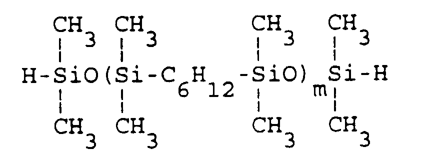 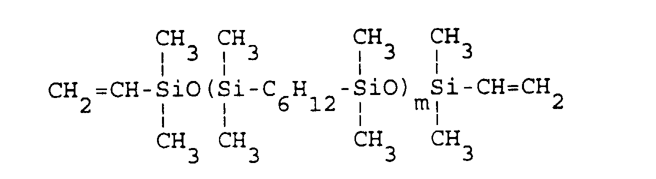 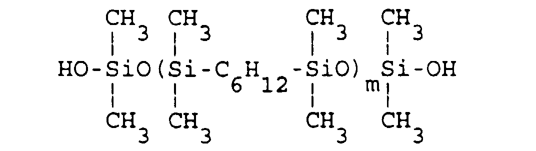 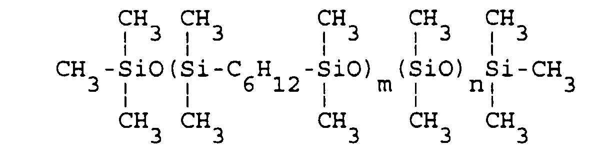 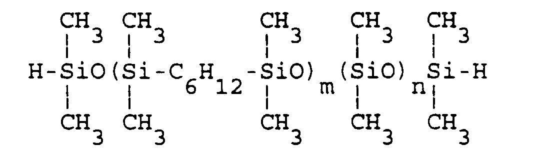 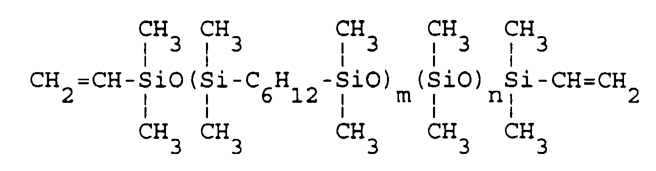 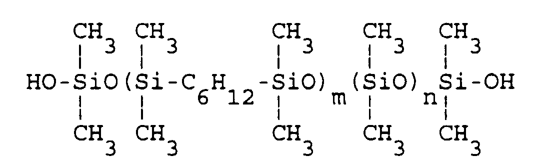 The subscripts m and n in the preceding formulas are defined above.

Synthesis of component (A) in the compositions of the present invention is not specifically restricted. Examples of such methods include: (i) an addition reaction in the presence of a platinum catalyst between a 1,3-dihydrogendisiloxane (such as 1,1,3,3-tetramethyldisiloxane and 1,3-dimethyl-1,3-diphenyldisiloxane) and a 1,3-dialkenyldisiloxane (such as 1,1,3,3-tetramethyl-1,3-divinyldisiloxane, 1,1,3,3-tetramethyl-1,3-diallyldisiloxane, and 1,3-dimethyl-1,3-diphenyl-1,3-divinyldisiloxane); (ii) an addition reaction in the presence of a platinum catalyst between an SiH-terminated polysilalkylenesiloxane and a vinyl-terminated dimethylpolysiloxane; (iii) an addition reaction in the presence of a platinum catalyst between a vinyl-terminated polysilalkylenesiloxane and an SiH-terminated dimethylpolysiloxane; (iv) a condensation reaction in the presence of a condensation reaction catalyst between a silanol-terminated polysilalkylenesiloxane and a dimethylpolysiloxane terminated by a silanol group or silicon-bonded hydrogen group; and (v) an addition reaction in the presence of a platinum catalyst between an alpha,omega-dihydrogensiloxane oligomer (such as 1,1,3,3,5,5-hexamethyltrisiloxane and 1,1,3,3,5,5,7,7-octamethyltetrasiloxane) and an alpha,omega-dialkenylsiloxane oligomer (such as 1,1,3,3-tetramethyl-1,3-divinyldisiloxane, 1,1,3,3,5,5-hexamethyl-1,5-divinyltrisiloxane, and 1,1,3,3,5,5,7,7-octamethyl-1,7-divinyltetrasiloxane).

The silica (B) functions to equip our compositions with an excellent and long-lasting antifoam activity under strong alkaline conditions. While component (B) is not specifically restricted as to type, its specific surface area must be at least 50 m²/g and is preferably at least 100 m²/g. A component (B) with a specific surface area below 50 m²/g has a substantially reduced dispersibility in component (A) with the resulting composition having a reduced antifoam activity. Component (B) is exemplified by fumed silica, calcined silica, precipitated silica, silica aerogel, quartz, and fused silica.

Although component (B) may be directly added to component (A), component (B) may also be added after its surface has been rendered hydrophobic by treatment with various organosilanes or organosiloxane oligomers, or by blending organosilanes or organosiloxane oligomers into the system during mixing of component (B) into component (A). The organosilanes suitable for rendering the surface of the silica hydrophobic are dimethyldichlorosilane, hexamethyldisilazane, and dimethyldialkoxysilane. The suitable organosiloxane oligomers are silanol-terminated dimethylsiloxane oligomers, trimethylsiloxy-terminated methylhydrogensiloxane oligomers, 1,1,3,3-tetramethyldisiloxane, and 1,3,5,7-tetramethylcyclotetrasiloxane.

Component (B) is added to the compositions of the present invention in the range of from 1 to 50 weight parts per 100 weight parts component (A). The antifoam activity and its persistence are reduced when component (B) is present at less than 1 weight part per 100 weight parts component (A). At the other extreme, the preparation of a homogeneous antifoam composition becomes highly problematic when component (B) is present at more than 50 weight parts per 100 weight parts component (A).

The antifoam composition of our invention is prepared by mixing components (A) and (B) as described above to homogeneity. The technique for preparing these compositions is not particularly restricted in scope and is exemplified by (i) mixing components (A) and (B) to homogeneity; (ii) gradually adding the specified quantity of component (B) to component (A) while stirring component (A); (iii) mixing component (B) to homogeneity into a portion of component (A) and then mixing the residual portion of component (A) into the resulting blend; and (iv) first preparing a homogeneous composition from components (A) and (B) and then heating this composition to 30°C to 200°C, and preferably to 50°C to 150°C, while stirring. When the compositions of the present invention are subjected to a heat treatment during preparation, a very small quantity of an acidic catalyst such as sulfuric acid, is preferably added to the system prior to said heat treatment. While no specific restrictions apply to the equipment used to prepare the compositions of this invention a heatable and stirrable device is preferred. The invention composition can be prepared using a homomixer, ball mill, colloid mill, or three-roll mill.

In addition to components (A) and (B) the antifoam composition of this invention may contain other components on an optional basis insofar as the object of the present invention is not impaired. For example, silanes such as organoalkoxysilanes, organohalosilanes, and organosilazanes, metal hydroxides such as aluminum hydroxide, calcium hydroxide, and magnesium hydroxide; bis amides such as those disclosed in US-A 5,192,336; polyoxyalkylene modified polydiorganosiloxanes; flake-form fillers such as mica; diorganopolysiloxanes such as diorganopolysiloxane, epoxy-functional diorganopolysiloxanes, and amino-functional diorganopolysiloxanes; pigments; and dyes.

Our antifoam composition can be formulated as an organic solvent-based antifoam, water-based emulsion, or solid, in accordance with the type of foaming system to be treated. When the foaming system is an oil-based or organic solvent-based system, the antifoam composition of our invention is preferably diluted with organic solvent. No specific restrictions apply to usable organic solvents for this dilution; other than the requirement that a homogeneous dispersion of the antifoam composition be obtained. Organic solvents are exemplified by hydrocarbon organic solvents, such as hexane, heptane, octane, methylcyclohexane, xylene, and petroleum naphtha; halohydrocarbon organic solvents, such as perchloroethylene, bromochloroethane, and dichlorobutane; amine organic solvents, such as triethylamine, butylamine, and tributylamine; alcohol organic solvents, such as isopropyl alcohol, butyl alcohol, and amyl alcohol; ether organic solvents, such as hexyl ether, butyl Cellosolve™ (ethylene glycol monobutyl ether), and dioxane; ketone organic solvents, such as methyl ethyl ketone, diethyl ketone, and methyl butyl ketone; ester organic solvents, such as ethyl acetate, Cellosolve™ (ethylene glycol monoethyl ether acetate) acetate, and ethyl propionate; and carboxylic acid organic solvents, such as acetic acid and propionic acid. When our antifoam composition is applied in a water-based foaming system, the antifoam composition is preferably used in the form of the water-based emulsion prepared by emulsifying with water, surfactant, and optionally a protective colloid. The antifoam of the present invention can also be used when formulated as a solid or powdered antifoam.

In the Examples, the viscosity values reported were measured at 25°C. The antifoam activity and its persistence were evaluated as follows. First, 0.50 g of the antifoam composition was added into a 100-mL volumetric flask. This was brought to 100 mL by the addition of tert-butanol to prepare a dispersion of the antifoam composition. Potassium hydroxide pellets were separately dissolved in a 1.5 weight% aqueous solution of polyoxyethylene octylphenyl ether surfactant (OCTAPOL™ 100 from Sanyo Kasei Kogyo Kabushiki Kaisha) to prepare an alkaline aqueous dispersion with a pH of 13. 100 mL of this alkaline aqueous dispersion was placed in a 300-mL glass bottle equipped with a lid. The bottle was placed on a shaker and shaken for 10 seconds to induce foaming. This was immediately followed by the pipette addition of 1.0 mL of the previously prepared tert-butanol dispersion of the antifoam composition. The time required for disappearance of the foam was measured and scored on the following scale to indicate antifoam activity:
- + + :: no more than 10 seconds required for foam disappearance
- + :: 11 to 20 seconds required for foam disappearance
- x :: more than 21 seconds required for foam disappearance.

The persistence of the antifoam activity was evaluated by continuation of the shake test of the sample prepared above. The bottle was returned to the shaker, shaken for another 10 seconds in order to induce foaming, and the time until foam disappearance (break time) was again measured. The shake test was repeated until a reading of two minutes or greater was observed. The larger the number of shake tests reported indicates a higher degree of persistance.

### Example 1

First 100 weight parts of a liquid organosilicon polymer (having a viscosity of 3,000 mPa.s [centipoise]) having the general formula 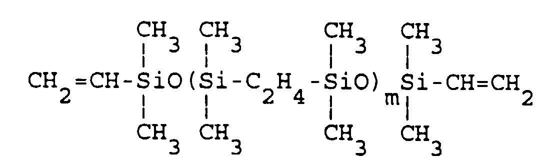 and 10 weight parts of precipitated silica (having a specific surface area of 300 m²/g) were mixed for 1 hour at room temperature. Then, 0.01 weight parts of sulfuric acid was added to the resulting mixture, which in turn was mixed for 2 hours at 60°C to provide an antifoam composition of the present invention. This composition was investigated for its antifoam activity and for its persistence. The results are reported in Table 1.

### Example 2

100 weight parts of a liquid organosilicon polymer (having a viscosity of 200 mPa.s [centipoise]) having the general formula 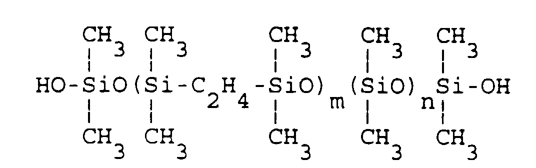 wherein m is an integer with a value of at least 2, n is an integer with a value of at least 1, and the ratio of m to n is 3 to 1, and 10 weight parts of precipitated silica (having a specific surface area of 300 m²/g) were mixed for 1 hour at room temperature. The resulting mixture was then mixed for 2 hours at 60°C to yield an antifoam composition of this invention. This composition was investigated for its antifoam activity and persistence by the methods delineated above. The results are also reported in Table 1.

### Example 3

100 weight parts of a liquid organosilicon polymer (having a viscosity of 3,000 mPa.s [centipoise]) having the general formula 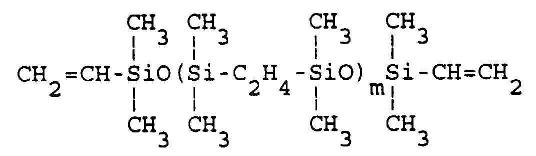 was mixed with 10 weight parts of fumed silica (having a specific surface area of 200 m²/g) whose surface had been rendered hydrophobic by treatment with hexamethyldisilazane. Next, 0.01 weight parts of sulfuric acid was added to the resulting mixture, which was then mixed for 2 hours at 60°C. After cooling, an antifoam composition of the present invention was finally obtained by the addition of sodium bicarbonate in a quantity equivalent to the sulfuric acid addition. This composition was investigated for its antifoam activity and persistence as described above. The results are included in Table 1.

### Comparative Example 1

An antifoam composition was prepared as in Example 1, but in this case using polydimethylsiloxane having a viscosity of 3,000 mPa.s (centipoise) in place of the liquid organosilicon polymer of Example 1. This composition was investigated for its antifoam activity and persistence as described above. The results are also reported in Table 1.

**Table 1**

| | Invention Examples | | | Comparative Example |
|---|---|---|---|---|
| | Example 1 | Example 2 | Example 3 | Comparative Example 1 |
| antifoam activity | + + | + + | + + | + |
| persistence of the antifoam activity* | 11 | 9 | 10 | 3 |

| | | | | |
|---|---|---|---|---|
| * - indicates the number of shake tests required for the break time to reach or exceed 2 minutes. | | | | |

From Table 1, it is clear that the antifoam compositions of the instant invention have excellent and highly persistent antifoam activity under strongly alkaline conditions in contrast to diorganopolysiloxane based antifoam compositions.

## Claims

1. An antifoam composition comprising:
(A) 100 weight parts of an organosilicon polymer having the general formula: 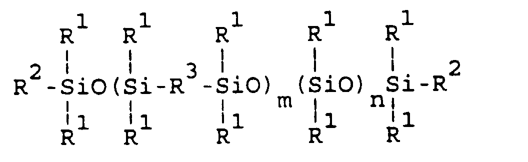 wherein R¹ denotes a monovalent hydrocarbon group free of aliphatic unsaturation, R² is selected from hydrogen, monovalent hydrocarbon groups, and hydroxyl groups, R³ denotes an alkylene group, m has a value of at least 2, n has a value of zero or greater than zero with the proviso that m is greater than or equal to n; and
(B) from 1 to 50 weight parts of a silica having a specific surface area of at least 50 m²/g.

2. A composition according to Claim 1, wherein (A) is selected from 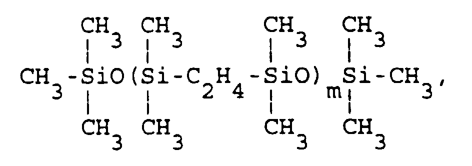 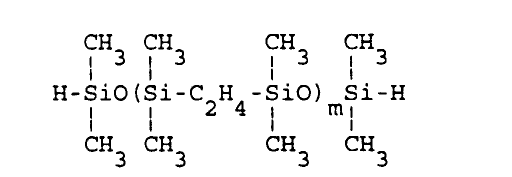 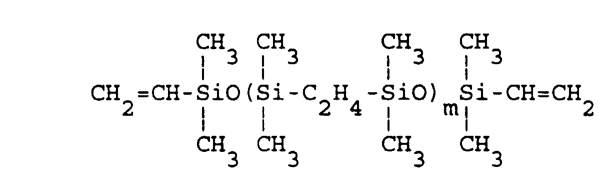 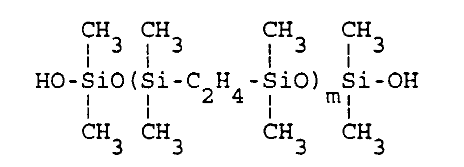 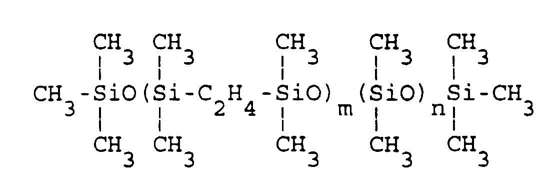 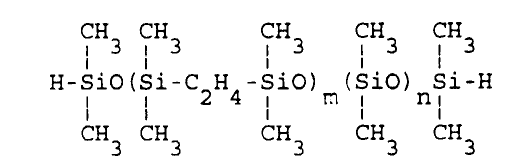 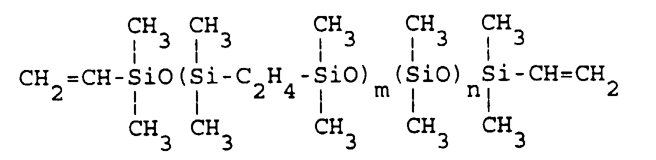 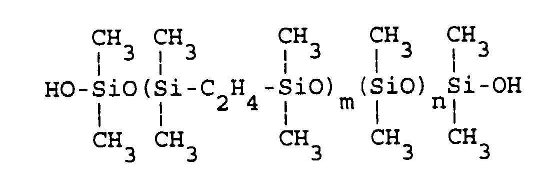 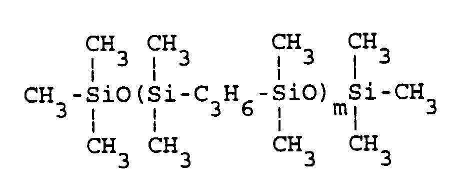 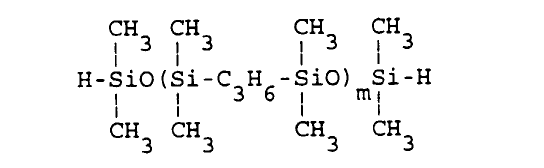 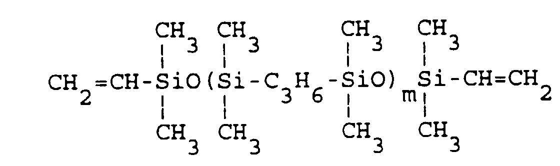 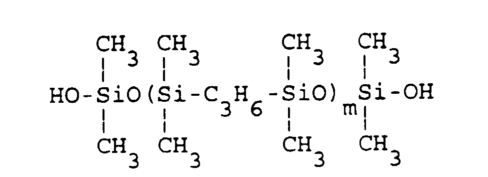 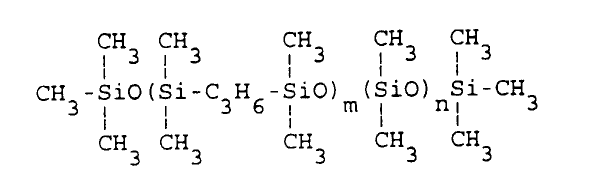 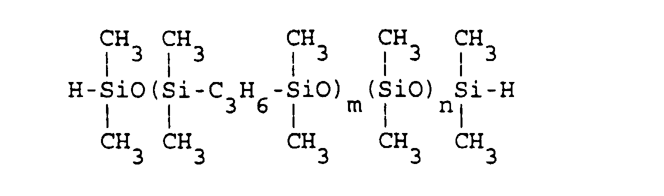 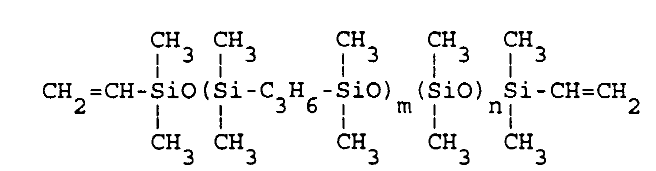 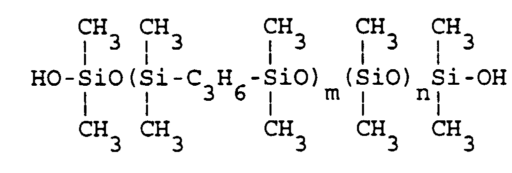 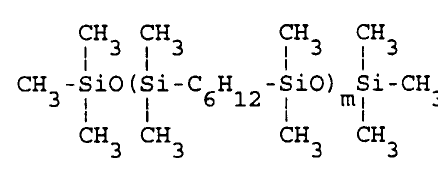 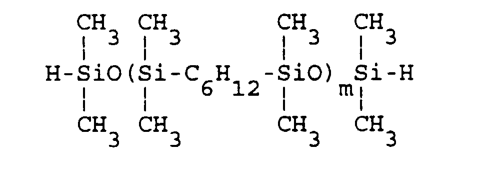 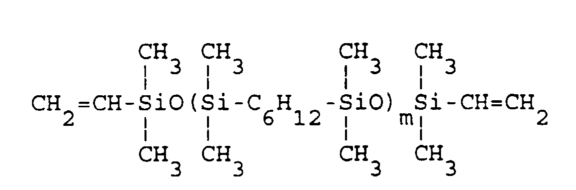 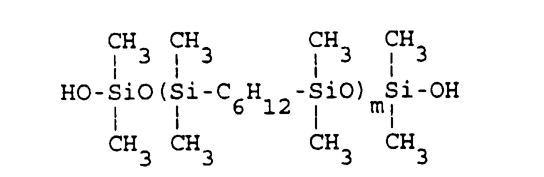 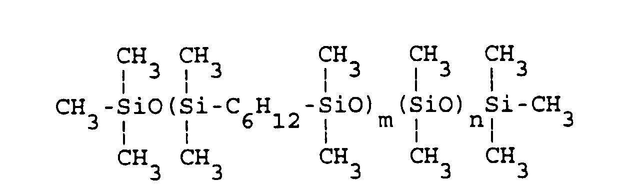 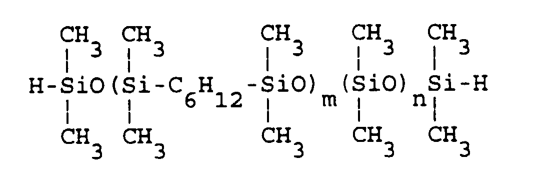 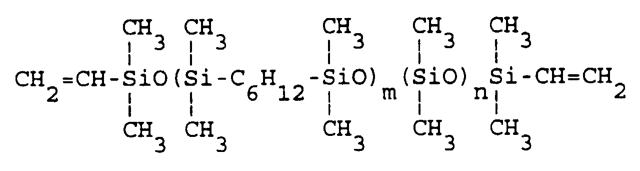 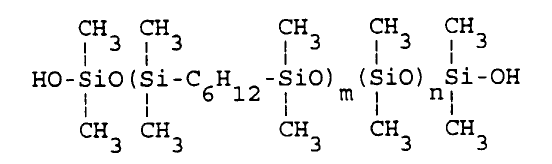 wherein m has a value of at least 2, n has a value of zero or greater than zero with the proviso that m is greater than or equal to n.

3. A composition according to Claim 1, wherein the composition further comprises a solvent.

4. A composition according to Claim 1, wherein the composition further comprises a surfactant and water.

5. A process of controlling foam, which includes the addition of an antifoam composition to a medium, wherein the antifoam composition comprises the composition of Claim 1.

## Patentansprüche

1. Antischaumzusammensetzung, die die folgenden Bestandteile enthält:
(A) 100 Gew.-Teile eines Organosiliciumpolymers der folgenden allgemeinen Formel: 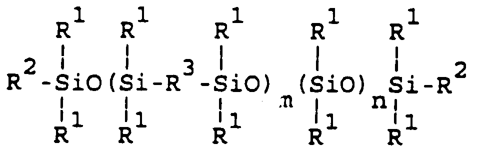 worin R¹ für eine einwertige, keine aliphatische ungesättigte Bindung aufweisende Kohlenwasserstoffgruppe steht, R² unter Wasserstoff, einwertigen Kohlenwasserstoffgruppen und Hydroxylgruppen ausgewählt ist, R³ eine Alkylengruppe bedeutet, m einen Wert von mindestens 2 besitzt, n einen Wert von 0 oder größer als 0 besitzt, wobei gilt, daß m größer oder gleich n ist;
und (B) 1 bis 50 Gew.-Teile eines Siliciumdioxids mit einer spezifischen Oberfläche von mindestens 50 m²/g.

2. Zusammensetzung nach Anspruch 1, wobei die Komponente (A) unter folgenden Verbindungen ausgewählt ist: 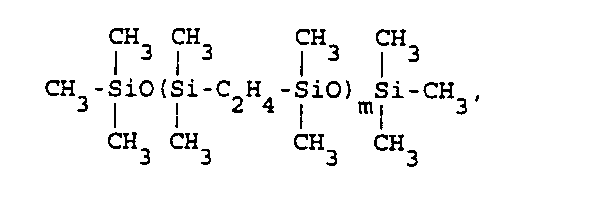 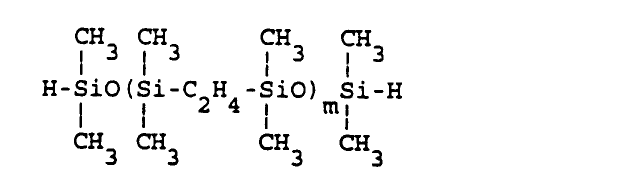 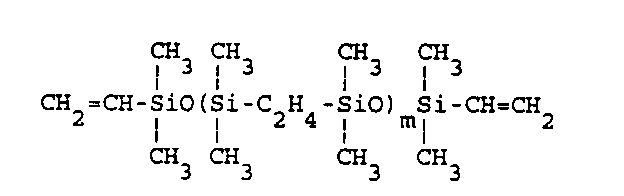 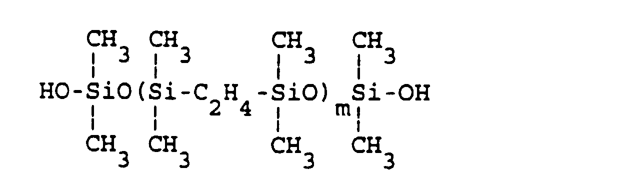 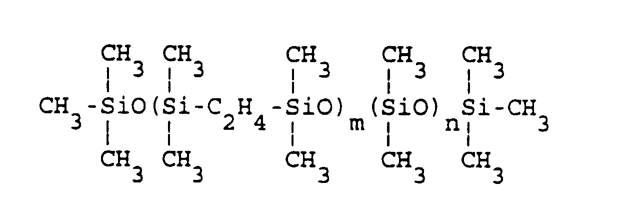 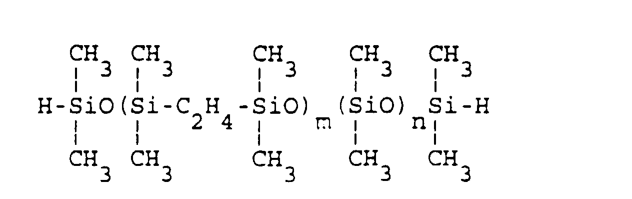 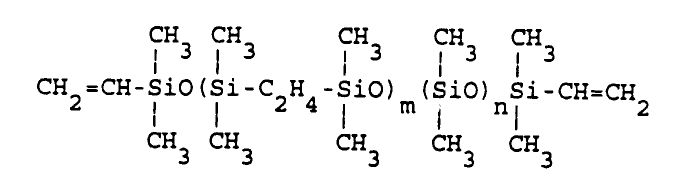 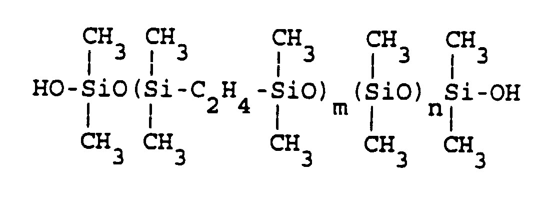 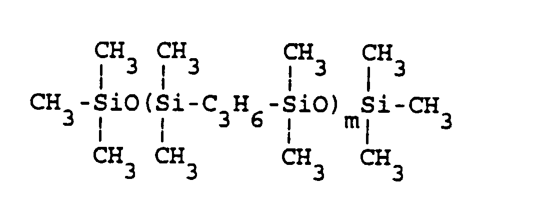 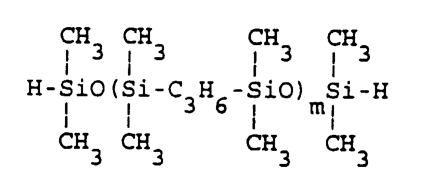 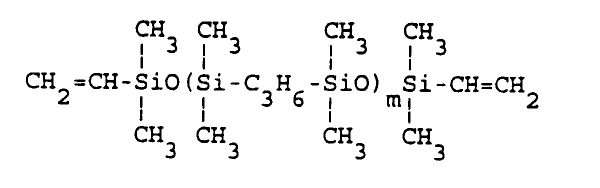 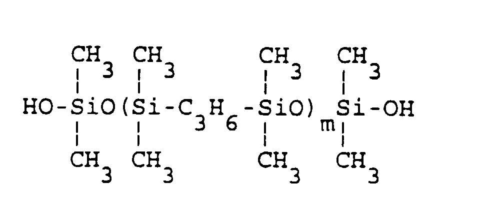 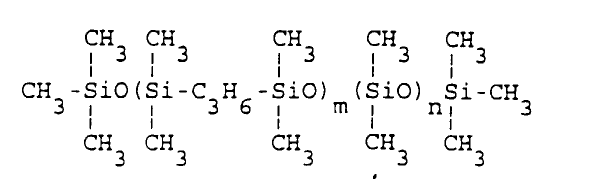 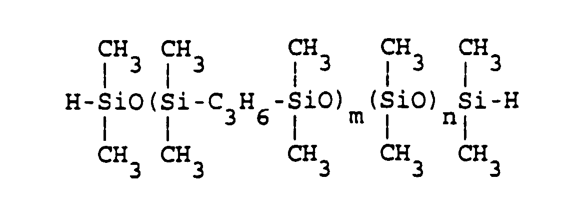 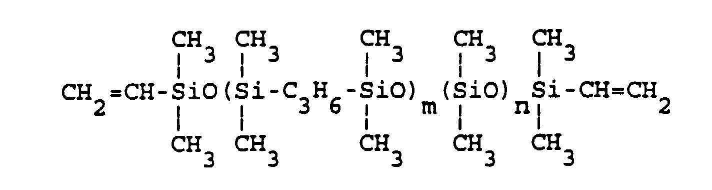 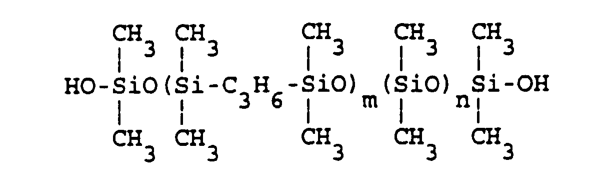 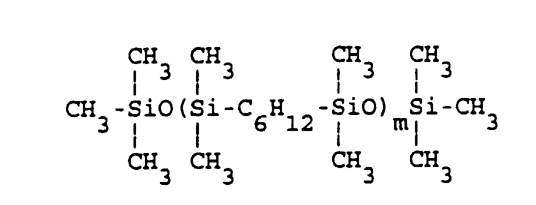 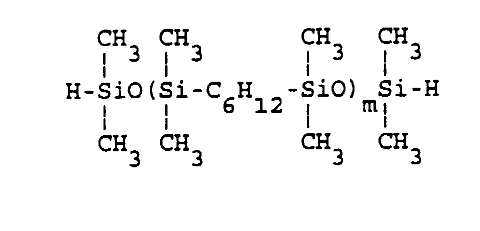 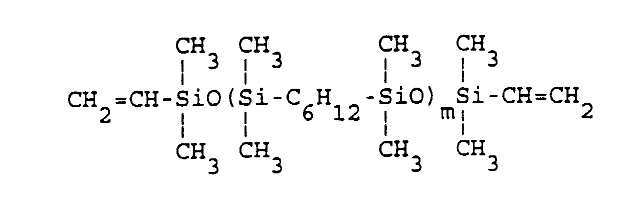 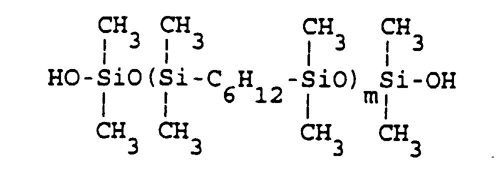 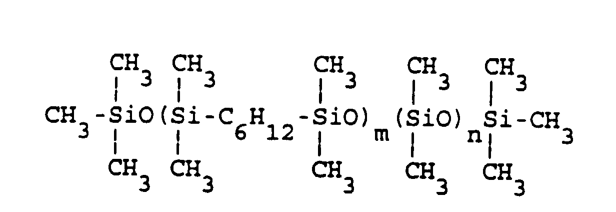 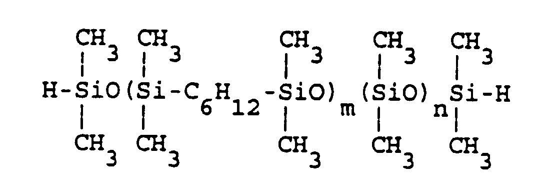 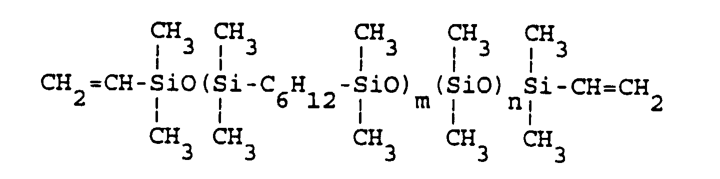 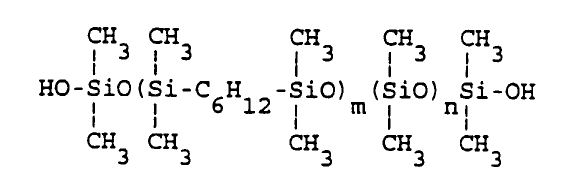 worin m einen Wert von mindestens 2 besitzt, n einen Wert von 0 oder größer als 0 besitzt, wobei gilt, daß m größer oder gleich n ist.

3. Zusammensetzung nach Anspruch 1, wobei die Zusammensetzung des weiteren ein Lösungsmittel enthält.

4. Zusammensetzung nach Anspruch 1, wobei die Zusammensetzung des weiteren ein Tensid und Wasser enthält.

5. Verfahren zur Schaumsteuerung durch Zugabe einer Antischaumzusammensetzung zu einem Medium, wobei die Antischaumzusammensetzung die Zusammensetzung nach Anspruch 1 umfaßt.

## Revendications

1. Une composition antimousse comprenant :
(A) 100 parties en poids d'un polymère organosilicié ayant la formule générale 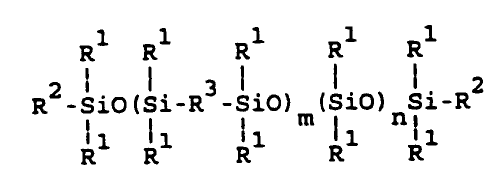 où R¹ représente un groupe hydrocarboné monovalent exempt d'insaturation aliphatique, R² est choisi parmi l'hydrogène, les groupes hydrocarbonés monovalents et les groupes hydroxyle, R³ représente un groupe alkylène, la valeur de m est d'au moins 2, la valeur de n est de zéro ou supérieure à zéro, avec la condition que m soit supérieur ou égal à n ; et
(B) 1 à 50 parties en poids d'une silice ayant une surface spécifique d'au moins 50 m²/g.

2. Une composition selon la revendication 1, dans laquelle (A) est choisi parmi 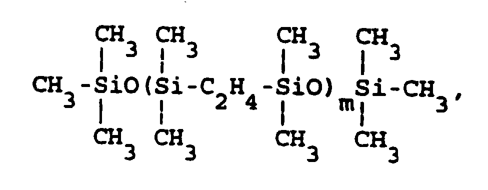 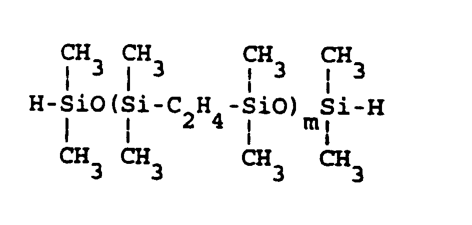 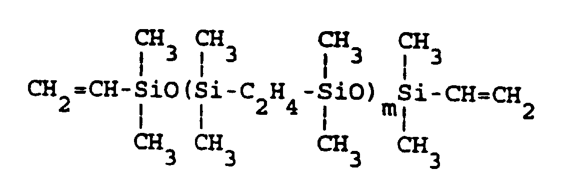 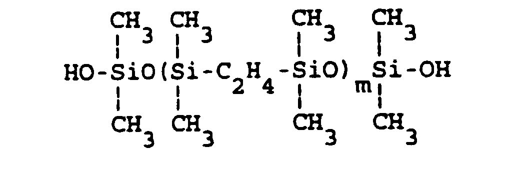 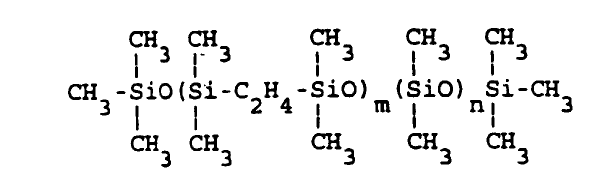 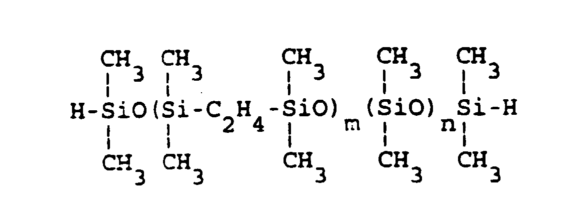 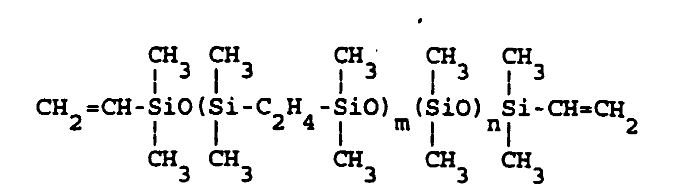 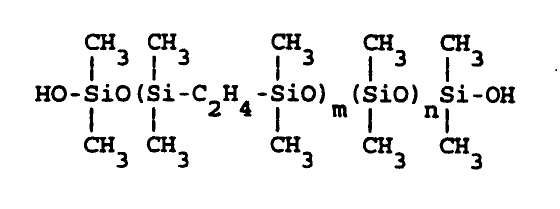 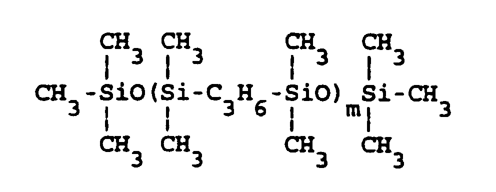 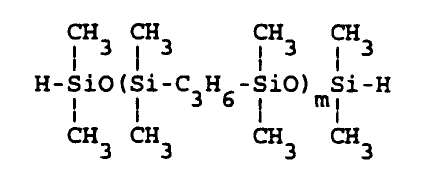 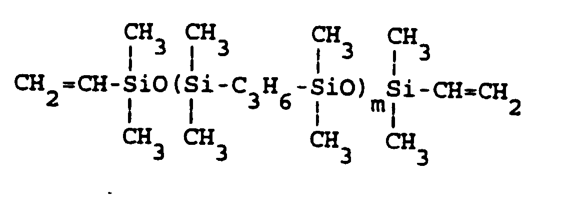 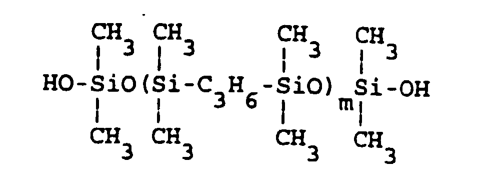 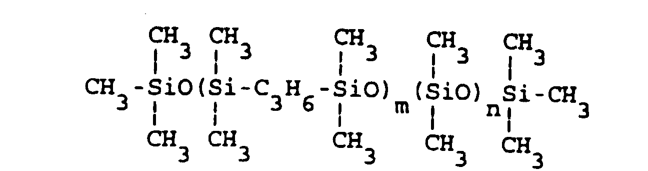 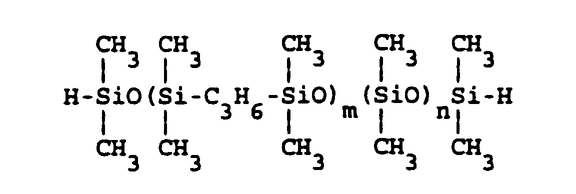 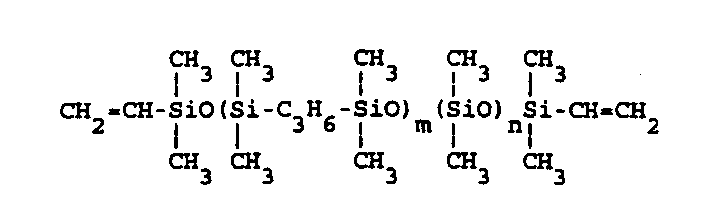 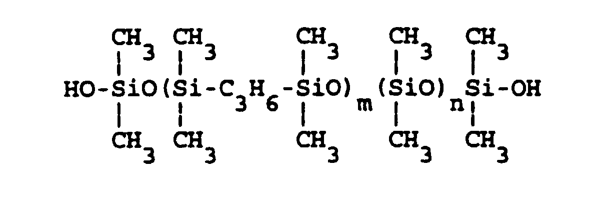 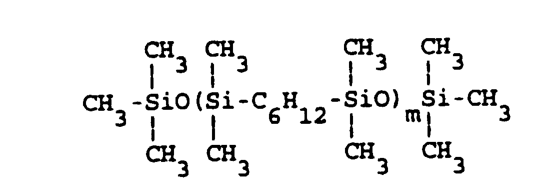 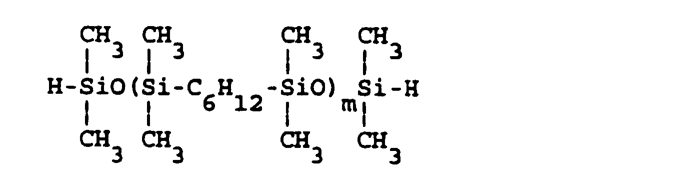 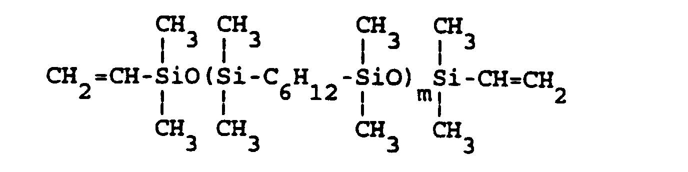 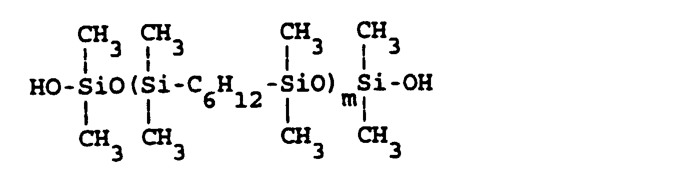 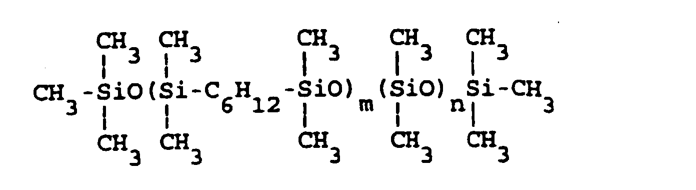 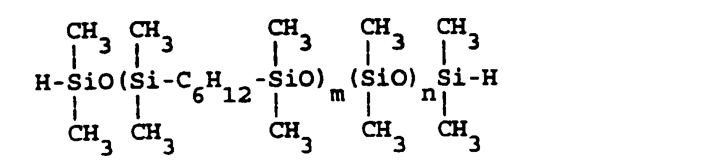 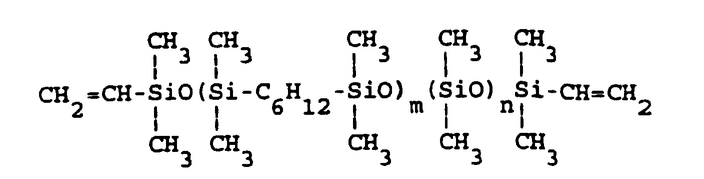 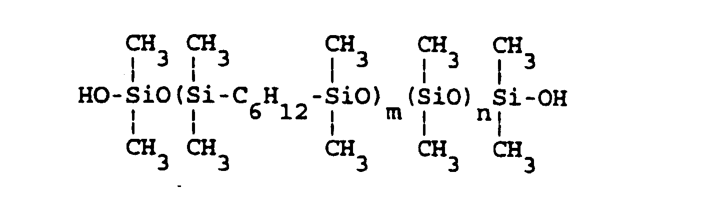 où la valeur de m est d'au moins 2, la valeur de n est de zéro ou supérieure à zéro, avec la condition que m soit supérieur ou égal à n.

3. Une composition selon la revendication 1, dans laquelle la composition comprend de plus un solvant.

4. Une composition selon la revendication 1, dans laquelle la composition comprend de plus un agent tensioactif et de l'eau.

5. Un procédé de lutte contre la mousse, qui comprend l'addition d'une composition antimousse à un milieu, dans lequel la composition antimousse consiste en la composition de la revendication 1.
